# EUROPEAN PATENT APPLICATION

(11) **EP 4 836 517 A1**
(43) Date of publication of application: **04.11.2026**
(21) Application number: 25741369.0
(22) Date of filing: 06.01.2025
(51) Int. Cl.: H04W 36/00

(54) **COMMUNICATION METHOD AND COMMUNICATION APPARATUS**

(30) Priority: 18.01.2024 CN 202410078713
(71) Applicant: Huawei Technologies Co., Ltd., Shenzhen, Guangdong 518129 (CN)
(72) Inventor: HU, Xingxing, Shenzhen, Guangdong 518129 (CN); ZHENG, Lili, Shenzhen, Guangdong 518129 (CN)
(74) Representative: Goddar, Heinz J.
(86) International application number: PCT/CN2025/070793
(87) International publication number: WO 2025/152806

(57) **Abstract**

This application provides a communication method and a communication apparatus. The method includes: A terminal device receives indication information of a first network device, where the terminal device performs accessing via a first cell of the first network device, the indication information indicates the terminal device to measure a reference signal sent by a second network device via the first cell. The terminal device receives the reference signal sent by the second network device via the first cell. The terminal device measures signal quality of the reference signal based on the indication information, and sends the signal quality of the reference signal to the first network device. This solution can reduce a probability of a radio link failure caused by switching performed by the terminal device.

## Description

This application claims priority to Chinese Patent Application No. 202410078713.3, filed with the China National Intellectual Property Administration on January 18, 2024 and entitled "COMMUNICATION METHOD AND COMMUNICATION APPARATUS", which is incorporated herein by reference in its entirety.

### TECHNICAL FIELD

This application relates to the field of communication technologies, and in particular, to a communication method and a communication apparatus.

### BACKGROUND

Non-terrestrial network (non-terrestrial network, NTN) communication is communication implemented by using non-terrestrial network devices. The non-terrestrial network devices include air network devices like satellites, unmanned aerial vehicles, and high altitude platform station (high altitude platform station, HAPS) communication systems. The NTN has advantages of wide coverage, long communication distance, high reliability, high flexibility, high throughput, and the like, and is not affected by geographical environments, climate conditions, and natural disasters. The NTN has been widely used in fields such as aeronautical communication, maritime communication, and military communication. Introducing the NTN into a 5th generation (5th generation, 5G) mobile network and subsequent evolved system architectures like a 6th generation (6th generation, 6G) system can greatly improve user experience. The NTN network can greatly enhance communication reliability, for example, by providing more stable communication services for users in high-speed moving scenarios like trains or airplanes. In addition, the NTN network can also provide larger coverage, for example, provide communication services for users in the sea or desert. Furthermore, the NTN network can further provide more data transmission resources and support more connections. Therefore, the status of the NTN will be further improved in the future. After the NTN is introduced into the 5G mobile network and subsequent evolved system architectures, switching technologies for terminal devices need to be further studied.

### SUMMARY

Embodiments of this application provide a communication method and a communication apparatus, to reduce a probability of a radio link failure caused by switching performed by a terminal device.

According to a first aspect, an embodiment of this application provides a communication method. The method may be performed by a terminal device or a module (for example, a chip) in the terminal device, and the terminal device performs accessing via a first cell of a first network device. The method includes: receiving indication information from the first network device, where the indication information indicates the terminal device to measure a reference signal sent by a second network device via the first cell; receiving the reference signal of the first cell from the second network device; and after receiving the reference signal, measuring signal quality of the reference signal, and sending the signal quality of the reference signal to the first network device. In this solution, the terminal device accesses the first cell via the first network device, obtains, through measurement based on the indication information of the first network device, the quality of the reference signal sent by the second network device via the first cell, and sends the quality of the reference signal to the network device, so that a switching failure or link quality deterioration after switching caused by switching performed when signal quality of the second network device is unknown can be avoided, thereby reducing a probability of a radio link failure caused by the switching by the terminal device. Further, according to the foregoing solution, after receiving the reference signal, the network device may determine a switching policy of the terminal device based on the quality of the reference signal. For example, if the network device determines that the quality of the reference signal is poor, the network device may indicate the terminal device not to continue to switch to accessing the first cell via the second network device, or may indicate the terminal device to switch to another cell with good signal quality, for example, a neighboring cell of the first cell.

In a possible implementation method, the terminal device receives a first time and a second time from the first network device, where the first time indicates a time at which the first network device stops serving the first cell, the second time indicates a time at which the second network device starts to serve the first cell, and the second time is less than or equal to the first time. The terminal device measures the signal quality of the reference signal between the second time and the first time. In this solution, the terminal device may determine, based on the received first time and the received second time, when to measure the reference signal of the first cell from the second network device.

In a possible implementation method, receiving the indication information from the first network device includes: The terminal device receives measurement configuration information from the first network device, where the measurement configuration information includes the indication information, and the measurement configuration information is used to configure the terminal device to measure the reference signal. In this solution, the terminal device may obtain the indication information by receiving the measurement configuration information, and does not need additional signaling to receive the indication information, thereby reducing system signaling overheads and processing complexity of the terminal device.

In a possible implementation method, the measurement configuration information further includes a measurement object and report configuration information, and the measurement object is a measurement object corresponding to the first cell. In this solution, the terminal device may determine to perform measurement based on the measurement object corresponding to the first cell.

In a possible implementation method, that the terminal device measures the signal quality of the reference signal based on the indication information includes: The terminal device receives first SMTC information and second SMTC information from the first network device. The terminal device measures the reference signal of the first cell from the second network device and a reference signal of the neighboring cell of the first cell based on the first SMTC information. The terminal device measures the reference signal of the neighboring cell of the first cell based on the second SMTC information.

In a possible implementation method, that the terminal device measures the reference signal of the first cell from the second network device and the reference signal of the neighboring cell of the first cell of the second network device based on the first SMTC information includes: The terminal device measures the reference signal of the first cell from the second network device and the reference signal of the neighboring cell of the first cell based on the first SMTC information between the second time and the first time.

In a possible implementation method, that the terminal device measures the reference signal of the neighboring cell of the first cell based on the second SMTC information includes: The terminal device measures the reference signal of the neighboring cell of the first cell based on the second SMTC information before the second time or after the first time.

In a possible implementation method, measuring the signal quality of the reference signal between the second time and the first time includes: The terminal device measures the quality of the signal of the first cell from the second network device between the second time and the first time, and measures quality of a signal of the first cell from the first network device between the second time and the first time.

In a possible implementation method, the terminal device separately maintains, between the second time and the first time, the measured quality of the signal of the first cell from the second network device and the measured quality of the signal of the first cell from the first network device.

In a possible implementation method, the terminal device receives first condition information from the first network device, where the first condition information includes radio resource configuration information of a first candidate cell and an execution condition for switching to the first candidate cell. The terminal device receives second condition information from the first network device, where the second condition information indicates to perform conditional switching to the first candidate cell when the measured signal quality of the reference signal of the first cell from the second network device is lower than a first threshold.

In a possible implementation method, the terminal device switches, at a third time, from accessing the first cell via the first network device to accessing the first cell via the second network device, where the third time is between the second time and the first time.

According to a second aspect, an embodiment of this application provides a communication method. The method may be performed by a first network device or a module (for example, a chip) in the first network device. The method includes: The network device sends indication information to a terminal device, where the indication information indicates the terminal device to measure a reference signal of a first cell from a second network device, and the first cell is a cell accessed by the terminal device via the first network device. The network device further receives signal quality of the reference signal from the terminal device. Therefore, the first network device may evaluate, based on the signal quality, whether the terminal device is to be switched to the second network device. If the quality of the reference signal of the first cell from the second network device is poor, the terminal device may avoid continuing to switch to accessing the first cell via the second network device. For example, the terminal device may switch to another cell with good signal quality, thereby reducing a probability of a radio link failure caused by switching performed by the terminal device.

In a possible implementation method, the first network device sends a first time and a second time to the terminal device, where the first time indicates a time at which the first network device stops serving the first cell, the second time indicates a time at which the second network device starts to serve the first cell, and the second time is less than or equal to the first time.

In a possible implementation method, that the first network device sends the indication information to the terminal device includes: The first network device sends measurement configuration information to the terminal device, where the measurement configuration information includes the indication information, the measurement configuration information is used to configure the terminal device to measure the reference signal, the measurement configuration information includes a measurement object and report configuration information, and the measurement object is a measurement object corresponding to the first cell.

In a possible implementation method, the first network device sends first SMTC information and second SMTC information to the terminal device, where the first SMTC information is used to measure the reference signal of the first cell from the second network device and a reference signal of a neighboring cell of the first cell, and the second SMTC configuration information is used to measure the reference signal of the neighboring cell of the first cell.

In a possible implementation method, the first network device sends first condition information to the terminal device, where the first condition information includes radio resource configuration information of a first candidate cell and an execution condition for switching to the first candidate cell. The first network device sends second condition information to the terminal device, where the second condition information indicates to perform conditional switching to the first candidate cell when the measured signal quality of the reference signal of the first cell from the second network device is lower than a first threshold.

For beneficial effects of various implementation methods of the first network device, refer to beneficial effects of the implementation methods of the terminal device in the first aspect. Details are not described again.

According to a third aspect, an embodiment of this application provides a communication method. The method may be performed by a terminal device or a module (for example, a chip) in the terminal device. The method includes: The terminal device receives a first time and a second time from a first network device, where the first time indicates a time at which the first network device stops serving a first cell, the second time indicates a time at which a second network device starts to serve the first cell, and the second time is less than or equal to the first time. The terminal device receives second indication information. The terminal device determines, based on the second indication information, not to access the first cell via the second network device between the second time and the first time. In this solution, it can be ensured that all terminal devices that are located in the first cell between the second time and the first time access the first cell via the first network device, to avoid interference between the terminal devices in the same cell because a part of the terminal devices access the first cell via the first network device and a part of the terminal devices access the first cell via the second network device.

In a possible implementation method, the terminal device receives the second indication information from the first network device, or receives the second indication information from the second network device.

In a possible implementation method, the second indication information indicates the terminal device not to access the first cell via the second network device between the second time and the first time.

In a possible implementation method, the second indication information indicates that the second network device is a target network device of the first cell.

According to a fourth aspect, an embodiment of this application provides a communication method. The method may be performed by a first network device or a module (for example, a chip) in the first network device. The method includes: The first network device sends a first time and a second time to a terminal device, where the first time indicates a time at which the first network device stops serving a first cell, the second time indicates a time at which the second network device starts to serve the first cell, and the second time is less than the first time. The first network device sends second indication information to the terminal device, where the second indication information is used to determine that the terminal device does not access the first cell via the second network device between the second time and the first time.

In a possible implementation method, the second indication information indicates that the second network device is a target network device of the first cell.

For beneficial effects of various implementation methods of the first network device, refer to beneficial effects of the implementation methods of the terminal device in the third aspect. Details are not described again.

According to a fifth aspect, an embodiment of this application provides a communication apparatus. The apparatus may be a terminal device, or may be a module (for example, a chip) in the terminal device. The apparatus has a function of implementing any one of the implementation methods of the first aspect. The function may be implemented by hardware, or may be implemented by hardware executing corresponding software. The hardware or the software includes one or more modules corresponding to the function.

According to a sixth aspect, an embodiment of this application provides a communication apparatus. The apparatus may be a first network device or a module (for example, a chip) in the first network device. The apparatus has a function of implementing any one of the implementation methods of the second aspect. The function may be implemented by hardware, or may be implemented by hardware executing corresponding software. The hardware or the software includes one or more modules corresponding to the function.

According to a seventh aspect, an embodiment of this application provides a communication apparatus, including units or means (means) for performing the steps of any one of the implementation methods of the first aspect to the fourth aspect.

According to an eighth aspect, an embodiment of this application provides a communication apparatus, including a processor and an interface circuit. The processor is configured to communicate with another apparatus through the interface circuit, and perform any one of the implementation methods of the first aspect to the fourth aspect. There are one or more processors.

According to a ninth aspect, an embodiment of this application provides a communication apparatus, including a processor coupled to a memory. The processor is configured to invoke a program stored in the memory, to perform any one of the implementation methods of the first aspect to the fourth aspect. The memory may be located inside or outside the apparatus. In addition, there may be one or more processors.

According to a tenth aspect, an embodiment of this application provides a communication apparatus, including a memory. The memory is configured to store computer instructions. When the computer instructions are run, the apparatus performs any one of the implementation methods of the first aspect to the fourth aspect.

In a possible implementation method, the communication apparatus further includes a processor configured to execute the computer instructions stored in the memory.

According to an eleventh aspect, an embodiment of this application further provides a computer program product. The computer program product includes a computer program or instructions. When the computer program or the instructions are run on a communication apparatus, any one of the implementation methods of the first aspect to the fourth aspect is performed.

According to a twelfth aspect, an embodiment of this application further provides a computer-readable storage medium. The computer-readable storage medium stores instructions. When the instructions are run on a communication apparatus, any one of the implementation methods of the first aspect to the fourth aspect is performed.

According to a thirteenth aspect, an embodiment of this application further provides a chip system, including a processor, configured to perform any one of the implementation methods of the first aspect to the fourth aspect.

According to a fourteenth aspect, an embodiment of this application further provides a communication system, including a terminal device configured to perform any one of the implementation methods of the first aspect and a first network device configured to perform any one of the implementation methods of the fourth aspect.

### BRIEF DESCRIPTION OF DRAWINGS

FIG. 1a is a diagram of an architecture of a communication system to which an embodiment of this application is applied;
FIG. 1b is a diagram of a network device;
FIG. 2a is a diagram of an architecture of an NTN-based communication system to which an embodiment of this application is applied;
FIG. 2b is another diagram of an architecture of an NTN-based communication system to which an embodiment of this application is applied;
FIG. 2c is another diagram of an architecture of an NTN-based communication system to which an embodiment of this application is applied;
FIG. 3 is a schematic flowchart of a communication method according to an embodiment of this application;
FIG. 4a is another schematic flowchart of a communication method according to an embodiment of this application;
FIG. 4b is another schematic flowchart of a communication method according to an embodiment of this application;
FIG. 4c is a diagram of orbit information represented by using a Kepler orbit format according to an embodiment of this application;
FIG. 4d is a diagram of orbit information represented by using a state vector according to an embodiment of this application;
FIG. 5 is a diagram of a structure of a communication apparatus according to an embodiment of this application; and
FIG. 6 is another diagram of a structure of a communication apparatus according to an embodiment of this application.

### DESCRIPTION OF EMBODIMENTS

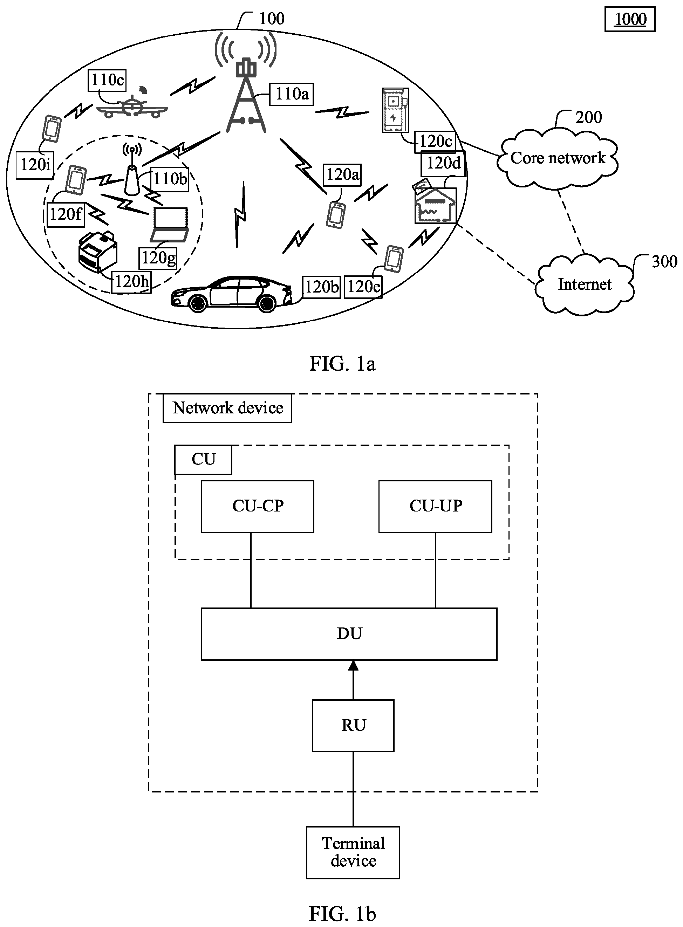

FIG. 1a is a diagram of an architecture of a communication system to which an embodiment of this application is applied. The communication system 1000 shown in FIG. 1a includes a radio access network 100 and a core network 200. Optionally, the communication system 1000 further includes an internet 300. The radio access network 100 may include at least one network device (for example, 110a to 110c in FIG. 1a), and may further include at least one terminal device (for example, 120a to 120i in FIG. 1a). The terminal device is connected to the network device in a wireless manner, and the network device is connected to the core network in a wireless or wired manner. A core network device and the network device may be different physical devices that are independent of each other, a function of the core network device and a logical function of the network device may be integrated into a same physical device, or a part of functions of the core network device and a part of functions of the network device may be integrated into one physical device. Terminal devices may be connected to each other in a wired or wireless manner, and network devices may be connected to each other in a wired or wireless manner. FIG. 1a is merely a diagram. The communication system may further include other network devices, for example, may further include a wireless relay device and a wireless backhaul device, which are not shown in FIG. 1a.

The network device is an access device through which the terminal device accesses the communication system in a wired or wireless manner. The network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a wireless fidelity (wireless fidelity, Wi-Fi) system, or the like; or may be a module or unit that completes a part of functions of the base station, for example, may be a central unit (central unit, CU), or may be a distributed unit (distributed unit, DU). The CU performs functions of a radio resource control protocol and a packet data convergence protocol (packet data convergence protocol, PDCP) of the base station, and may further perform functions of a service data adaptation protocol (service data adaptation protocol, SDAP). The DU performs functions of a radio link control layer and a medium access control (medium access control, MAC) layer of the base station, and may further perform some or all functions of a physical layer. For specific descriptions of the foregoing protocol layers, refer to related technical specifications of the 3rd generation partnership project (3rd generation partnership project, 3GPP). The network device may be a macro base station (for example, 110a in FIG. 1a); may be a micro base station or an indoor station (for example, 110b in FIG. 1a); may be a high-altitude platform, an aircraft, or a satellite (for example, 110c in FIG. 1a); may be a relay node or a donor node; or the like. A specific technology and a specific device form that are used by the network device are not limited in embodiments of this application.

The terminal device is a device having a wireless transceiver function, and may send a signal to the network device, or receive a signal from the network device. The terminal device includes but is not limited to a terminal apparatus, a terminal, user equipment (user equipment, UE), a mobile station, a mobile terminal, and the like. The terminal device may be widely used in various scenarios, for example, device-to-device (device-to-device, D2D), vehicle-to-everything (vehicle-to-everything, V2X) communication, machine type communication (machine type communication, MTC), an internet of things (internet of things, IoT), virtual reality, augmented reality, industrial control, autonomous driving, telemedicine, a smart grid, smart furniture, a smart office, a smart wearable, smart transportation, and a smart city. The terminal device may be specifically a mobile phone, a tablet computer, a computer having a wireless transceiver function, a wearable device, a vehicle, an airplane, a ship, a robot, a robotic arm, a smart home device, or the like. A specific technology and a specific device form that are used by the terminal device are not limited in embodiments of this application.

In embodiments of the present invention, the terminal device may have a plurality of states. For example, the terminal device may be in a connected state, and the terminal device in the connected state may perform data transmission. A connection may be established between the terminal device in the connected state and the network device, and a connection may be established between the network device and the core network. The terminal device may alternatively be in an inactive state. Once there is data that needs to be transmitted, a terminal device in an active state may quickly establish a connection to the network device. For example, once the terminal device in the active state needs to perform data transmission, the network device may deliver a paging message. After receiving the paging message, the terminal device may quickly establish the connection to the network device. A connection may not be established between the terminal device in the inactive state and the network device, but a connection may be established between the network device and the core network for the terminal device. The terminal device may alternatively be in an idle state. A connection may not be established between the terminal device in the idle state and the network device, or between the network device and the core network.

The network device and the terminal device may be at fixed locations, or may be movable. The network device and the terminal device may be deployed on the land, including an indoor or outdoor device, a handheld device, or a vehicle-mounted device; may be deployed on a water surface; or may be deployed on a plane, a balloon, or an artificial satellite. Application scenarios of the network device and the terminal device are not limited in embodiments of this application.

Roles of the network device and the terminal device may be relative. For example, an aircraft or a satellite 110c in FIG. 1a may be configured as a mobile network device. For the terminal device 120i that accesses the radio access network 100 via 110c, 110c is a network device. However, for the network device 110a, 110c may also be a terminal device. In other words, 110a and 110c communicate with each other according to a wireless air interface protocol. Certainly, 110a and 110c may alternatively communicate with each other according to an interface protocol between network devices. In this case, for 110a, 110c may also be a network device. Therefore, both the network device and the terminal device may be collectively referred to as communication apparatuses. 110a to 110c in FIG. 1a may be referred to as communication apparatuses having a function of the network device, and 120a to 120i in FIG. 1a may be referred to as communication apparatuses having a function of the terminal device.

Communication between the network device and the terminal device, between network devices, or between terminal devices may be performed by using a licensed spectrum, an unlicensed spectrum, or both the licensed spectrum and the unlicensed spectrum; or may be performed by using a spectrum below 6 gigahertz (gigahertz, GHz), a spectrum above 6 GHz, or both the spectrum below 6 GHz and the spectrum above 6 GHz. A spectrum resource used for wireless communication is not limited in embodiments of this application.

In embodiments of this application, the function of the network device may alternatively be performed by a module (for example, a chip) in the network device, or may be performed by a control subsystem including the function of the network device. The control subsystem including the function of the network device may be a control center in the foregoing application scenarios such as the smart grid, the industrial control, the smart transportation, and the smart city. The function of the terminal device may alternatively be performed by a module (for example, a chip or a modem) in the terminal device, or may be performed by an apparatus including the function of the terminal device.

In this application, the network device sends a downlink signal or downlink information to the terminal device, where the downlink information is carried on a downlink channel. The terminal device sends an uplink signal or uplink information to the network device, where the uplink information is carried on an uplink channel. To communicate with the network device, the terminal device needs to establish a wireless connection to a cell controlled by the network device. The cell that establishes the wireless connection to the terminal device is referred to as a serving cell of the terminal device.

In this application, numbering of terms is generally for ease of differentiation, and the numbering does not mean that there is a sequence or priority difference between the terms. For example, for a "first network device" and a "second network device", "first" and "second" are usually only used to distinguish between the two network devices, and should not constitute a limitation on an implementation process of embodiments of this application.

FIG. 1b is a diagram of a network device. As shown in FIG. 1b, the network device includes one or more CUs, one or more DUs, and one or more radio units (radio units, RUs). For clarity, FIG. 1b shows only one CU, one DU, and one RU. The CU is configured to be connected to a core network and one or more DUs. Optionally, the CU may have a part of functions of the core network. The CU may include a CU-control plane (control plane, CP) and a CU-user plane (user plane, UP).

The CU and the DU may be configured based on a protocol layer function of a wireless network implemented by the CU and the DU. For example, the CU is configured to implement functions of a PDCP layer and a protocol layer above the PDCP layer (for example, a radio resource control (radio resource control, RRC) layer and/or an SDAP layer), and the DU is configured to implement functions of a protocol layer below the PDCP layer (for example, a radio link control (radio link control, RLC) layer, a MAC layer, and/or a physical (physical, PHY) layer). For another example, the CU is configured to implement functions of a protocol layer above a PDCP layer (for example, an RRC layer and/or an SDAP layer), and the DU is configured to implement functions of the PDCP layer and a protocol layer below the PDCP layer (for example, an RLC layer, a MAC layer, and/or a PHY layer).

The foregoing configurations of the CU and the DU are merely examples. Alternatively, functions of the CU and the DU may be configured based on a requirement. For example, the CU or the DU may be configured to have functions of more protocol layers, or the CU or the DU may be configured to have a part of processing functions of protocol layers. For example, a part of functions of the RLC layer and functions of protocol layers above the RLC layer are set in the CU, and remaining functions of the RLC layer and functions of protocol layers below the RLC layer are set in the DU. For another example, functions of the CU or the DU may be divided based on a service type or another system requirement, for example, based on a delay. A function whose processing time needs to meet a low delay requirement is set on the DU, and a function whose processing time does not need to meet the delay requirement is set on the CU.

The DU and the RU may cooperate to jointly implement a function of the PHY layer. One DU may be connected to one or more RUs. Functions of the DU and the RU may be configured into a plurality of manners based on a design. For example, the DU is configured to implement a baseband function, and the RU is configured to implement an intermediate radio frequency function. For another example, the DU is configured to implement a higher layer function of the PHY layer, and the RU is configured to implement a lower layer function of the PHY layer or implement the lower layer function and a radio frequency function. The higher-layer function of the physical layer may include a part of functions of the physical layer, and the part of functions are closer to the MAC layer. The lower-layer function of the physical layer may include another part of functions of the physical layer, and the part of functions are closer to an intermediate radio frequency side.

As described in the background, the NTN is introduced into a 5G system and a subsequent evolved system architecture. In embodiments of this application, an example in which a non-terrestrial network device in the NTN is a satellite is used for description. It should be understood that the non-terrestrial network device in the NTN may be another non-terrestrial network device.

Usually, satellites may be classified into high-Earth orbit satellites and medium and low-Earth orbit satellites based on orbital altitudes of the satellites. The high-Earth orbit satellite is also referred to as a geosynchronous orbit (geosynchronous orbit, GSO) satellite. A movement speed of the GSO satellite is the same as that of the earth rotation system. Therefore, the GSO satellite remains fixed relative to the ground, and a corresponding GSO satellite cell has large coverage, and a diameter of the cell is generally 500 kilometers. The medium and low-Earth orbit satellite moves faster relative to the ground. Therefore, a service coverage area provided by the medium and low-Earth orbit satellite also moves accordingly. Correspondingly, cells covered by the medium and low-Earth orbit satellite may be classified into a terrestrial quasi-earth-fixed cell and a terrestrial earth-moving cell. The terrestrial quasi-earth-fixed cell is a cell formed by a moving satellite by adjusting a beam of the satellite, and a location of the formed cell on the ground is fixed in a specific time period. The terrestrial earth-moving cell is a cell in which a satellite does not dynamically adjust a beam direction of the satellite, and a cell with small beam coverage of the satellite moves with the movement of the satellite.

The satellites may be generally classified into two forms based on operating modes. A first form is a transparent form, which is also referred to as a forwarding form. In this form, a satellite forwards cell information of a terrestrial network device (for example, a base station) or another satellite, and mainly forwards a signal. A function of the satellite may be radio frequency filtering, frequency conversion, and/or signal amplification. In this form, the satellite may also be considered as a relay, and regenerate and forward a signal, which may be regenerating and forwarding a physical layer signal. A second form is a regenerative (regenerative) form. In this form, a satellite has all processing functions of a base station or a part of processing functions of the base station.

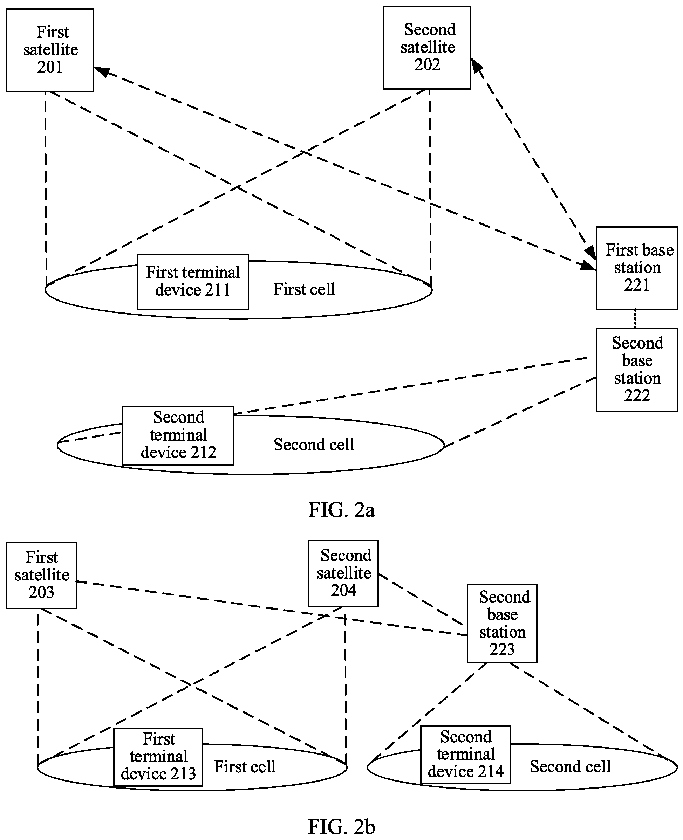

FIG. 2a is a diagram of an architecture of an NTN-based communication system according to an embodiment of this application. In the architecture of the system shown in FIG. 2a, at least one satellite may operate in a transparent form. For example, the communication system may include at least a first satellite 201, a second satellite 202, a first terminal device 211, and a first base station 221. Both the first satellite 201 and the second satellite 202 operate in the transparent form, and both the first satellite 201 and the second satellite 202 may maintain a connection to the first base station 221. The first terminal device 211 may communicate with the first base station 211 in a specific time period via the first satellite 201. The first satellite 201 may include a first cell that covers the first terminal device 211. In the first cell, the first terminal device 211 may receive a signal from the first satellite 201. The first terminal device 211 establishes a connection to the first base station 211 via the first cell of the first satellite 201 to communicate with the first base station 211. The first cell may be a serving cell of the first terminal device, and the first cell may be referred to as a first cell of the first satellite 201. In the method in this embodiment, as the first satellite 201 moves, the first cell cannot be covered, and the second satellite 202 may provide the same first cell to serve the first terminal device 211. The first terminal device 211 may switch from the first satellite 201 to the second satellite 202. In other words, the first terminal device 211 may switch from communicating with the first base station 221 via the first satellite 201 to communicating with the first base station 221 via the second satellite 202. Similarly, the second satellite 202 may also be used as a relay satellite. That the first satellite 201 and the second satellite 202 have the same cell means that the first base station 221 corresponding to the first cell provided by the first satellite 201 and the first cell provided by the second satellite 202 does not change. In this case, it may also be considered that the first satellite 201 and the second satellite 202 provide coverage for the first terminal device 211 in the same cell, that is, the first cell does not change. For the first terminal device 211, although a satellite that provides a communication service changes, a cell covered by the satellite does not change. That the cell does not change, or that the first satellite 201 and the second satellite 202 provide the same first cell may mean that a physical cell identifier (physical cell identifier, PCI) of the cell does not change, and a PCI of the first cell provided by the first satellite 201 and the second satellite 202 remains unchanged. In addition, a frequency of a synchronization signal and physical broadcast channel block (synchronization signal and PBCH block, SSB) sent in the same cell may also remain unchanged.

When the second satellite 202 provides the first cell to cover the first terminal device 211, the first terminal device 211 communicates with the first base station 211 via the first cell of the second satellite 202. In this case, the first cell is still the serving cell of the first terminal device, and the first cell may also be referred to as the first cell of the second satellite 202. It should be understood that a "neighboring cell" or a "neighboring cell of the first cell" in embodiments of this application is a neighboring cell of the serving cell of the terminal device, for example, may be a second cell.

As shown in FIG. 2a, the communication system may further include a second base station 222 and a second terminal device 212. The second base station 222 provides a serving cell, namely, the second cell, for the second terminal device 212. The second cell may be considered as the neighboring cell of the first cell, or may be used as a candidate cell for switching of the first terminal device 211. A PCI of the second cell is different from the PCI of the first cell. The second base station 222 and the first base station 221 may be a same base station or different base stations. When the second base station 222 and the first base station 221 are two different base stations, the second base station 222 may communicate with the first base station 221. The second base station 222 may be a satellite or a terrestrial base station. This is not limited herein.

FIG. 2b is a diagram of an architecture of another NTN-based communication system according to an embodiment of this application. In the communication system, at least one satellite may operate in a regenerative form. For example, the communication system in FIG. 2b includes a first satellite 203, a second satellite 204, and a first terminal device 213. Both the first satellite 203 and the second satellite 204 operate in the regenerative form. Similar to the communication system in FIG. 2a, both the first satellite 203 and the second satellite 204 may provide a first cell covering the first terminal device 213. For a relationship between the first satellite 203, the second satellite 204, and the first cell, refer to the descriptions of the relationship between the first satellite 201, the second satellite 202, and the first cell covering the first terminal device 211 in FIG. 2a. The first terminal device 213 directly communicates with the first satellite 203 or the second satellite 204. Similarly, the first terminal device 213 may communicate with the first satellite 203 in a specific time period, and the first terminal device 213 accesses the first cell via the first satellite 203. The first cell may be referred to as a serving cell of the first terminal device, and the first cell may also be referred to as a first cell of the first satellite 203. As the first satellite 203 moves, the first satellite 203 cannot cover the first cell. In this case, the second satellite 204 may cover the first cell. The first terminal device 213 may switch from the first satellite 203 to the second satellite 204. After the switching, the first terminal device 213 communicates with the second satellite 204. In this case, the first terminal device 213 accesses the first cell via the second satellite 204. The first cell is still the serving cell of the first terminal device 213, and the first cell may also be referred to as a first cell of the second satellite 204. A PCI corresponding to the first cell may not change before and after the switching. Similarly, the communication system shown in FIG. 2b may further include a second terminal device 214, a second base station 223, a second cell, and the like. The second cell may be considered as a neighboring cell of the first cell, or may be used as a candidate cell for switching of the first terminal device 213. Details are not described herein again.

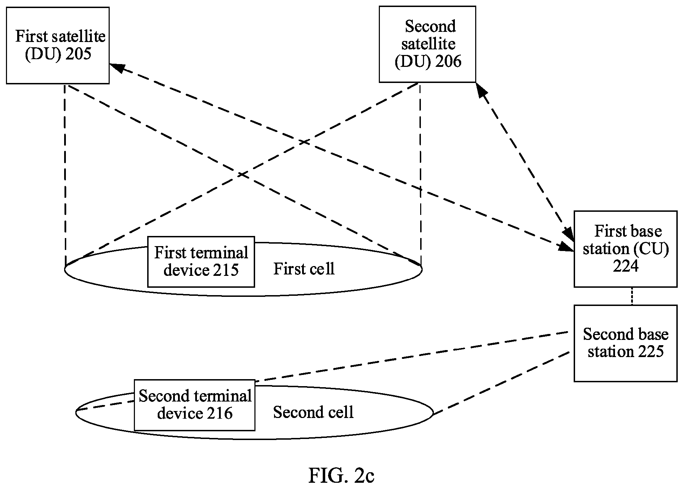

FIG. 2c is a diagram of an architecture of another NTN-based communication system according to an embodiment of this application. In this architecture, a first satellite 205 and a second satellite 206 have a part of processing functions of a base station, for example, a DU function, and a CU function of the base station is deployed on a first base station 224. A first terminal device 215 communicates with the first base station 224 via the first satellite 205 or the second satellite 206. Similarly, the communication system shown in FIG. 2c may further include a second terminal device 216, a second base station 225, a first cell, a second cell, and the like. For a relationship between the second terminal device 216, the second base station 225, the first cell, the second cell, and the like, refer to the descriptions of the diagram of the architecture of the communication system in FIG. 2a and the diagram of the architecture of the communication system in FIG. 2b. Details are not described herein again. In a regenerative operating mode, satellites may be classified into a regenerative satellite without an inter-satellite link, that is, there is no inter-satellite link (inter-satellite link, ISL) between satellites; and a regenerative satellite with an inter-satellite link, that is, there is an interface between satellites that can directly exchange data, where the inter-satellite link is an Xn interface.

Switching of the terminal device may be classified into two switch modes: hard switch and soft switch. In the hard switch mode, time periods in which the first satellite and the second satellite serve the first cell do not overlap in a time dimension. During the switching, the first satellite first stops serving the terminal device via the first cell, and then the second satellite serves the terminal device via the first cell. The terminal device first disconnects from the first satellite (for example, at a time at which the first satellite stops serving the terminal, the terminal device disconnects from the first satellite), and then connects to the second satellite. A link interruption phenomenon may occur on the terminal device during the switching. In the soft switch mode, time periods in which the first satellite and the second satellite serve the first cell overlap in a time dimension. Before the first satellite stops serving the terminal device via the first cell, the second satellite already starts to serve the terminal device via the first cell. Before disconnecting from the first satellite, the terminal device starts to perform synchronization with the second satellite, then maintains connections to the cell via both the first satellite and the second satellite, and then disconnects from the first satellite. In the two switching scenarios, when a satellite changes, the base station does not need to send a layer 3 handover command to the terminal device in the first cell, and the terminal device inherits a radio resource configuration previously configured by the base station for the terminal device. These two types of switching may also be referred to as satellite switch with resynchronization (satellite switch with re-sync).

FIG. 2a is used as an example. Because locations of the first satellite 201 and the second satellite 202 are different, when the first terminal device 211 switches from the first satellite 201 to the second satellite 202 in the soft switch mode, quality of a signal received by the first terminal device 211 from the second satellite 202 may be poor. In this case, if the first terminal device 211 still switches to the second satellite 202, a radio link failure between the first terminal device 211 and the second satellite 202 may occur. An embodiment of this application provides a communication method, to reduce a probability of a radio link failure caused by switching performed by a terminal device, thereby ensuring communication reliability.

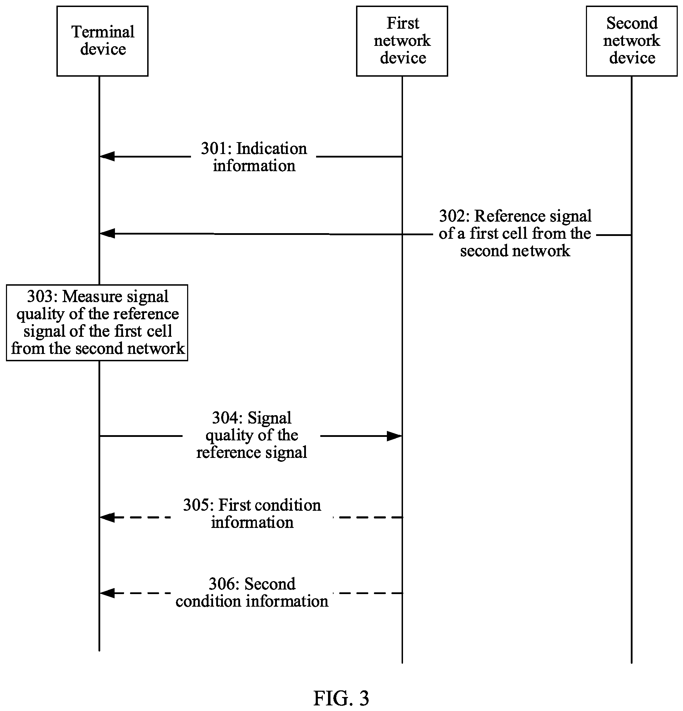

FIG. 3 is a schematic flowchart of a communication method according to an embodiment of this application. This embodiment can reduce a probability of a radio link failure caused by switching performed by a terminal device. This embodiment is performed by the terminal device or a module (for example, a chip) in the terminal device, a first network device or a module (for example, a chip) in the first network device, and a module (for example, a chip) in a second network device. The terminal device may correspond to the first terminal device in FIG. 2a, FIG. 2b, or FIG. 2c, the first network device may correspond to the first satellite in FIG. 2a, FIG. 2b, or FIG. 2c, and the second network device may correspond to the second satellite in FIG. 2a, FIG. 2b, or FIG. 2c. The following uses an example in which the terminal device, the first network device, and the second network device perform the method for description.

Step 301: The terminal device receives indication information from the first network device.

A current status of the terminal device is a terminal device that accesses a first cell via the first network device. The first cell is referred to as a serving cell of the terminal device. The first network device and the second network device may be respectively the first satellite and the second satellite of the first cell in switching. In other words, the first network device serves the first cell in a first period of time, the second network device serves the first cell in a second period of time, and the first period of time and the second period of time overlap in time. A PCI of the first cell remains unchanged in the first period of time and the second period of time.

In this case, the terminal device may receive the indication information from the first network device. If the first network device is a satellite that performs transparent forwarding, the indication information is sent by a ground base station to the first network device, and then forwarded by the first network device to the terminal device. If the first network device is a satellite in a regenerative form, the indication information is directly sent by the first network device to the terminal device. It should be understood that an NTN communication architecture with the first network device, the second network device, and the terminal device is not limited in this application.

The indication information indicates the terminal device to measure a reference signal of the first cell from the second network device.

Optionally, the first network device may further send indication information #A to the terminal device, to indicate that soft switch from accessing the first cell via the first network device to accessing the first cell via the second network device is supported. For example, the first network device sends, to the terminal device by using a broadcast message, indication information indicating that the first cell supports satellite switch with resynchronization, and sends a first time and a second time (for example, before measuring the reference signal of the first cell from the second network device) to the terminal device by using the broadcast message. The first time indicates a time at which the first network device stops serving the first cell, and the second time indicates a time at which the second network device starts to serve the first cell. The second time is less than or equal to the first time, or the second time is earlier than or equal to the first time. The terminal device may measure signal quality of the reference signal between the second time and the first time. In this way, the terminal device may determine, based on the received first time and the received second time, when to measure the reference signal of the first cell from the second network device.

In a possible implementation in which the terminal device receives the indication information from the first network device, the terminal device receives measurement configuration information from the first network device, where the measurement configuration information includes the indication information, the measurement configuration information is used to configure the terminal device to measure the reference signal of the first cell from the second network device, the measurement configuration information further includes a measurement object, and the measurement object is configured with a frequency to be monitored by the terminal device and other information. In this way, the terminal device may obtain the indication information by receiving the measurement configuration information, and does not need to add an additional piece of signaling to receive the indication information, thereby saving signaling.

Optionally, the measurement object may be a measurement object corresponding to the first cell (for the terminal device, the measurement object may also be referred to as a measurement object of the serving cell, and the terminal device obtains the quality of the signal of the first cell based on the measurement object). The terminal device may measure the reference signal of the first cell from the second network device based on the measurement object corresponding to the first cell, and may add the indication information to the measurement object corresponding to the first cell, to indicate the terminal device to measure the reference signal of the first cell from the second network device. Optionally, the measurement object may be another measurement object. The network device may add the indication information to the another measurement object, to indicate the terminal device to measure the reference signal of the first cell from the second network device. The another measurement object may be used only to measure the reference signal that is of the first cell and that is received from the second network device, or may be used to measure a reference signal of a neighboring cell of the first cell. It should be understood that, the reference signal of the first cell from the second network device is a reference signal sent by the second network device via the first cell, and a reference signal of the first cell from the first network device is a reference signal sent by the first network device via the first cell. The only difference lies in an expression form.

Optionally, the measurement configuration information may include report configuration information, and a report configuration indicates a standard for triggering reporting of a measurement report. Triggered reporting may be classified into event-triggered reporting and periodically-triggered reporting. A configuration of the event-triggered reporting includes various event types, thresholds, duration in which a trigger condition is met, types of reference signals (for example, an SSB or a channel state information reference signal (channel state information reference signal, CSI-RS)), and the like (for example, an A4 event is defined as that signal quality of a neighboring cell is higher than a threshold). Usually, the terminal device that meets a measurement reporting condition does not immediately trigger reporting, and measurement reporting is triggered only when the measurement reporting condition is continuously met in the duration in which the trigger condition is met. A configuration of the periodically-triggered reporting includes a reporting periodicity, a type of a reference signal, and a list of allow-listed cells. The report configuration information includes the indication information (for example, report configuration information of the A4 event includes the indication information, and the terminal device is thus indicated to use the first cell from the second network device as the neighboring cell in the A4 event, that is, determine whether the quality of the signal of the first cell from the second network device is the threshold of the A4 event). For this report configuration, the terminal device evaluates, only at the second time and the first time, whether the event is met or whether to perform reporting.

In another possible implementation in which the terminal device receives the indication information from the first network device, the indication information may be event-triggered reporting information, the event-triggered reporting information may be used to measure or evaluate the quality of the signal of the first cell from the second network device, and the event-triggered reporting is specifically used to measure or evaluate the quality of the signal of the first cell specially from the second network device.

In another possible implementation in which the terminal device receives the indication information from the first network device, the indication information may be existing event-triggered reporting information, for example, the event is an A1, A2, A3, A4, A5, or A6 event. When performing event measurement corresponding to the event-triggered reporting information or performing measurement reporting evaluation, the terminal device considers the first cell of the second network device as a neighboring cell.

In another possible implementation in which the terminal device receives the indication information from the first network device, the terminal device receives other configuration information, where the other configuration information includes the indication information. For example, the other configuration information may be an RRC message or a medium access control (Medium Access Control, MAC) control element (control element, CE), and the indication information may be sent to the terminal device by using the RRC message or the MAC CE.

Step 302: The terminal device receives the reference signal of the first cell from the second network device.

If the second network device is a satellite that performs transparent forwarding, the reference signal is sent by a ground base station to the second network device, and then forwarded by the second network device to the terminal device. If the second network device is a satellite in the regenerative form, the reference signal is directly sent by the second network device to the terminal device.

Step 303: The terminal device measures the reference signal of the first cell from the second network device.

After receiving the indication information from the first network device, the terminal device measures the reference signal of the first cell from the second network device based on the indication information. The terminal device may measure the reference signal of the first cell from the second network device based on the measurement configuration information received from the first network device.

As described above, the measurement configuration information may include the measurement object. The measurement object includes a frequency of a synchronization signal and physical broadcast channel block (synchronization signal and PBCH block, SSB), an SSB subcarrier spacing, an SSB-based measurement timing configuration (SSB-based measurement timing configuration, SMTC), an allow-listed cell, an exclude-listed cell, and the like. It should be noted that the SSB and the SMTC in this application may alternatively be replaced with other names. This is not limited in this application. For example, the SSB may be referred to as a reference signal, and the SMTC may be referred to as a reference signal measurement timing configuration.

Each cell periodically sends a plurality of SSB beams (that is, performs SSB beam sweeping) in time domain. To ensure that all the SSB beams of each cell can be accurately measured, when delivering the measurement configuration information, a base station indicates a time domain position and duration for starting SSB measurement in addition to an SSB frequency that needs to be measured. That is, a time window for SSB searching is indicated to the terminal device, and the time window is configured by using the SMTC. The SMTC may be configured to effectively indicate the time window for SSB searching to the terminal device, thereby reducing unnecessary measurement power consumption of the terminal device.

The SMTC indicates a time sequence configuration, including an SMTC periodicity (periodicity), SMTC duration (duration), and an SMTC offset (offset), delivered by the base station to the terminal device when the terminal device performs SSB-based measurement on a cell. For example, an SMTC configuration is given by an SMTC 1, and a configuration information element corresponding to the SMTC 1 is an SSB-MTC, which includes two sub-information elements: periodicityAndOffset and duration.

periodicityAndOffset indicates an SMTC periodicity (which represents a repetition periodicity of a measurement action or a periodicity of an SMTC measurement window) and an SMTC offset (which is used to determine the measurement window, for example, may be a start subframe of the time window for SSB searching by the UE in the periodicity).

duration indicates SMTC duration (which represents duration that the measurement action should last after the measurement action is started).

The UE generally uses timing of a current serving cell as a reference to determine a window for searching for an SSB of a neighboring cell by the UE.

For example, the UE determines, according to the following formula, that a first subframe of the measurement window corresponds to a radio frame number (system frame number, SFN) and a subframe number (subframe) of the current serving cell: $SFN mod T = \left(FLOOR \left(SMTC offset/10\right)\right)$

If the SMTC periodicity is longer than five subframes, subframe=SMTC offset mod 10; otherwise, subframe=SMTC offset or (SMTC offset+5).$T = CEIL \left(SMTC periodicity/10\right) . CEIL \left(\right) indicates rounding up .$

Optionally, the measurement object further includes the allow-listed cell and the exclude-listed cell. The network device may configure specific to-be-measured cell lists, that is, the list of allow-listed cells and the list of exclude-listed cells. For the exclude-listed cell, the terminal device no longer performs event measurement and measurement reporting for the cell. The allow-listed cell is a cell for which the terminal device performs event measurement and measurement reporting.

Optionally, the network device allocates a corresponding measurement object identifier, MeasObjectId for short, to each measurement object.

The terminal device may measure the reference signal based on a specific configuration of the measurement object.

Optionally, the measurement configuration information may further include measurement quantity configuration information. The measurement quantity configuration information is used to configure a measurement quantity, and the measurement quantity may include:
reference signal received power (reference signal received power, RSRP), which reflects received strength of the reference signal;
a received signal strength indicator (received signal strength indicator, RSSI), which reflects total signal strength of a current channel;
reference signal received quality (reference signal received quality, RSRQ), which reflects a signal-to-noise ratio and an interference level of current channel quality, and is approximately a ratio of the RSRP to the RSSI; and
a signal-to-interference-plus-noise ratio (signal-to-interference-plus-noise ratio, SINR), which reflects a signal-to-interference ratio of the current channel, and is an important indicator for measuring the terminal device.

The terminal device may determine, based on the measurement quantity configuration information, a specific measurement quantity that is of the reference signal and is to be measured, to provide a basis for a subsequent switching policy. A measurement quantity used in a general switching policy mainly uses measurement-based RSRP, RSRQ, or SINR as a trigger quantity. Specifically, the terminal device performs measurement based on the measurement configuration information. When the terminal device determines that triggered reporting (including event-triggered reporting or periodically-triggered reporting) of a specific report configuration is met, the terminal device reports a measurement report. Content of the measurement report includes at least one of a measurement ID MeasId, a serving cell measurement result measResultServingMOList, or a neighboring cell measurement result measResultNeighCells. The serving cell measurement result includes a physical cell identifier and a cell-level measurement result, for example, a cell-level RSRP, RSRQ, or SINR measurement result. The serving cell measurement result may further include a beam-level measurement result, an SSB index, or a CSI-RS index. The beam-level measurement result is, for example, a beam-level RSRP, RSRQ, or SINR measurement result. A neighboring cell measurement quantity includes a physical cell identifier and a cell-level measurement result of a neighboring cell, and may further include a beam-level measurement result of the neighboring cell.

When performing measurement, the terminal device may receive first SMTC information and second SMTC information (for example, before measuring the reference signal of the first cell from the second network device) from the first network device. The first SMTC information is used by the terminal device to measure the reference signal of the first cell from the second network device and the reference signal of the neighboring cell, and the second SMTC information is used to measure the reference signal of the neighboring cell or the reference signal of the first cell from the first network device. The terminal device may measure different reference signals based on the first SMTC information and the second SMTC information. In other words, the terminal device may measure the reference signal of the first cell from the second network device and the reference signal of the neighboring cell of the first cell based on the first SMTC information, and the terminal device may measure the reference signal of the neighboring cell of the first cell based on the second SMTC information.

The terminal device may further receive the first time and the second time (for example, before measuring the reference signal of the first cell from the second network device) from the first network device. The first time indicates the time at which the first network device stops serving the first cell, and the second time indicates the time at which the second network device starts to serve the first cell. The second time is less than or equal to the first time, or the second time is earlier than or equal to the first time. The terminal device starts to measure the reference signal of the first cell from the second network device at a specific time between the second time and the first time.

The terminal device may further perform different measurement at different times based on the SMTC information. For example, the terminal device measures the reference signal of the neighboring cell of the first cell based on the second SMTC information before the second time or after the first time, and the terminal device measures the reference signal of the first cell from the second network device and the reference signal of the neighboring cell of the first cell based on the first SMTC information between the second time and the first time. For another example, the terminal device measures the reference signal of the neighboring cell and the reference signal of the first cell from the first network device based on the second SMTC information before the second time; or the terminal device measures only the reference signal of the neighboring cell based on the second SMTC information before the second time. For another example, the terminal device measures the reference signal of the first cell from the second network device and the reference signal of the neighboring cell based on the first SMTC information between the second time and the first time; or the terminal device measures the reference signal of the first cell from the second network device, the reference signal of the first cell from the first network device, and the reference signal of the neighboring cell based on the first SMTC information between the second time and the first time. It should be understood that, between the second time and the first time, the terminal device may measure the reference signal of the first cell from the first network device based on the first SMTC information, or may directly measure the reference signal of the first cell from the first network device without depending on the first SMTC information.

Before measuring the reference signal of the first cell from the second network device, the terminal device may further receive a third SMTC from the first network device. The third SMTC information is used by the terminal device to measure the reference signal of the first cell from the second network device. The terminal device measures only the reference signal of the first cell from the second network device based on the third SMTC information. It should be noted that the third SMTC and the first SMTC may not appear at the same time. For example, the terminal device receives the second SMTC and the third SMTC from the first network device. The first network device may configure a plurality of SMTCs (referred to as an SMTC set #1 for short) for the terminal device (for example, may configure four SMTCs, and the four SMTCs have a same periodicity and same duration, but different SMTC offsets), and the SMTCs are used to measure the reference signal of the neighboring cell of the first cell or the reference signal of the first cell. For the third SMTC, in an implementation, the first network device sends a plurality of SMTC configurations to the terminal device in the measurement configuration. The plurality of SMTC configurations include the second SMTC and the third SMTC. The first network device sends indication information #C in the measurement configuration information, to indicate that a specific SMTC in the plurality of SMTC configurations is the third SMTC. For example, the indication information #C indicates a specific SMTC configuration in which the specific SMTC is the third SMTC in the plurality of SMTC configurations. In another implementation, an SMTC is added to the measurement configuration information to measure the reference signal of the first cell from the second network device, and the SMTC is the third SMTC. Optionally, when the first network device configures the third SMTC for the terminal device, the first network device configures a maximum of three SMTCs for the terminal device in the SMTC set #1, to measure the reference signal of the neighboring cell of the first cell or the reference signal of the first cell. Optionally, the terminal device uses the third SMTC only between the second time and the first time. When the terminal device switches to the first cell of the second network device, the terminal device does not use the third SMTC to perform measurement.

Optionally, when the terminal device measures the reference signal of the first cell from the second network device between the second time and the first time, because of high-speed mobility of the first network device and the second network device, a time difference between arrival of the reference signal of the first cell from the first network device and arrival of the reference signal of the first cell from the second network device at the terminal device dynamically changes. As a result, a previously configured SMTC configuration for measuring the reference signal of the first cell from the second network device may be inappropriate. In this case, the network device may configure the terminal device to measure a propagation delay difference (propagation delay difference) between the terminal device and the first network device and the terminal device and the second network device (for example, the first network device configures, by using an RRC message #1, the terminal device to measure the propagation delay difference between the terminal device and the first network device and the terminal device and the second network device). Further, optionally, the network device (for example, the first network device) notifies the terminal device to report, after the second time, the propagation delay difference between the terminal device and the first network device and the terminal device and the second network device. For example, the first network device includes indication information #E in the RRC message #1, to indicate the terminal device to report, after the second time, the propagation delay difference between the terminal device and the first network device and the terminal device and the second network device. After the terminal device reports the propagation delay difference (for example, a propagation delay difference #1) between the terminal device and the first network device and the terminal device and the second network device to the first network device, when the terminal device detects that a latest propagation delay difference (for example, a propagation delay difference #2) between the terminal device and the first network device and the terminal device and the second network device is higher than the propagation delay difference (for example, the propagation delay difference #1) previously reported by the terminal device by a specific threshold (for example, the first network device configures the threshold in the RRC message #1), the terminal device reports the latest propagation delay difference (for example, the propagation delay difference #2) between the terminal device and the first network device and the terminal device and the second network device to the first network device.

After obtaining quality of the reference signal of the first cell from the second network device and quality of the reference signal of the first cell from the first network device between the second time and the first time, the terminal device separately maintains, between the second time and the first time, the measured quality of the reference signal of the first cell from the second network device and the measured quality of the reference signal of the first cell from the first network device. For example, measurement outputs of a reference signal are classified into a beam-level measurement result (which may also be referred to as a reference signal-level measurement result, for example, a measurement result corresponding to an SSB) and a cell-level measurement result. After physical layer filtering ends, the beam-level measurement result is obtained, and the beam-level measurement result is input to a radio resource control (radio resource control, RRC) layer for further processing. The RRC layer performs beam combination to obtain the cell-level measurement result, and then filters the cell-level measurement result to obtain final quality that is of the reference signal and that is used for reporting. In addition, the RRC layer may select a beam after the filtering is completed, and report the selected beam to a network. The terminal device separately maintains, between the second time and the first time, the measured quality of the reference signal of the first cell from the second network device and the measured quality of the reference signal of the first cell from the first network device. The terminal device separately performs, at a physical layer, physical layer filtering on the quality of the reference signal of the first cell from the first network device and the quality of the reference signal of the first cell from the second network device, to obtain beam-level measurement results. Then, the beam-level quality of the reference signal of the first cell from the first network device and the beam-level quality of the reference signal of the first cell from the second network device are separately input to the RRC layer for filtering and beam combination, to obtain cell-level quality of the reference signal of the first cell from the first network device and cell-level quality of the reference signal of the first cell from the second network device. The cell-level quality of the reference signal of the first cell from the first network device and the cell-level quality of the reference signal of the first cell from the second network device may be reported to the network. Optionally, the terminal device may further select a beam after completing the filtering at the RRC, and report, to the network, a selected beam of the reference signal of the first cell from the second network device or a selected beam of the reference signal of the first cell from the first network device.

Optionally, when the terminal device determines that the quality of the reference signal of the first cell from the second network device is poor (for example, when the quality of the reference signal of the first cell from the second network device is lower than a first threshold), the terminal device does not perform soft switch. In other words, the terminal device needs to wait for a switching configuration or a switching command sent by the first network device, or wait for a conditional switching execution condition sent by the first network device to be met, before switching to the neighboring cell (for example, a second cell).

Optionally, when the terminal device determines that the quality of the reference signal of the first cell from the second network device is good (for example, when the quality of the reference signal of the first cell from the second network device is higher than a first threshold), the terminal device performs soft switch.

Step 304: The terminal device sends, to the first network device, the measured quality of the reference signal of the first cell from the second network device.

Sending of the measured quality of the reference signal by the terminal device to the first network device is triggered based on a standard for triggering reporting of the measurement report. For example, the measurement configuration information may include the report configuration information, and the report configuration indicates the standard for triggering reporting of the measurement report. Triggered reporting may be classified into event-triggered reporting and periodically-triggered reporting. A configuration of the event-triggered reporting includes various event types, thresholds, duration in which a trigger condition is met, types of reference signals (for example, an SSB or a channel state information reference signal (channel state information reference signal, CSI-RS)), and the like. Usually, the terminal device that meets a measurement reporting condition does not immediately trigger reporting, and measurement reporting is triggered only when the measurement reporting condition is continuously met in the duration in which the trigger condition is met. A configuration of the periodically-triggered reporting includes a reporting periodicity, a type of a reference signal, and a list of allow-listed cells. The terminal device performs corresponding measurement based on content of the configuration, and sends the measurement report based on the reporting periodicity and a reporting interval. For each piece of report configuration information, the network device allocates a corresponding report configuration identifier (ReportConfigId for short).

A network side may configure a plurality of pieces of measurement configuration information. For example, the measurement configuration information further includes a measurement identifier (identifier, ID). The measurement ID is used to link a measurement object and a measurement configuration as a set. Details are as follows:

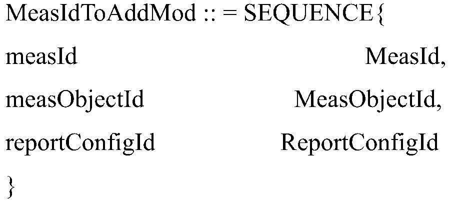

The measurement ID measId associates a measurement object identifier MeasObjectId with a measurement report configuration identifier reportConfigId, thereby linking the measurement object and a measurement report configuration. When sending a measurement report to the network device, the terminal device indicates the measId to the network device, and the network device may find the corresponding measObjectId and reportConfigId based on the measId, to determine that the received measurement report is a measurement report of a specific event. The network device may further link a plurality of measurement objects to a same measurement report configuration by configuring a plurality of measIds, or may link a plurality of measurement report configurations to a same measurement object. For example, a measurement report sent by the terminal device to the first network device carries the measured quality of the reference signal of the first cell from the second network device.

Optionally, the report configuration information of the measurement configuration information may include the indication information in step 301. The terminal device measures, based on the measurement configuration corresponding to the measurement object associated with the reporting configuration, the reference signal that is of the first cell and that is received from the second network device, and reports a measurement result based on the report configuration information. After the terminal device reports the quality of the reference signal to the first network device, the first network device performs subsequent processing according to a switching policy. For example, the first network device may determine, based on the quality of the reference signal that is of the first cell and that is received from the second network device, whether the terminal device needs to switch to the neighboring cell (for example, the second cell). If the quality of the reference signal of the first cell from the second network device is poor, for example, is lower than a specific threshold, the first network device configures, for the terminal device, a switching configuration or a switching command for switching to the neighboring cell (for example, the second cell). If the quality of the reference signal of the first cell from the second network device is good, for example, is not lower than a specific threshold, the first network device does not need to configure, for the terminal device, a switching configuration or a switching command for switching to the neighboring cell (for example, the second cell), and the terminal device switches to accessing the first cell via the second network device (that is, performs soft switch from the first network device to the second network device).

The first network device may further send, to a third network device, the quality of the reference signal that is of the first cell and that is received from the second network device, and the third network device determines whether the terminal device needs to switch to the neighboring cell (for example, the second cell). If the quality of the reference signal of the first cell from the second network device is poor, for example, is lower than a specific threshold, the third network device configures, for the terminal device, a switching configuration or a switching command for switching to the neighboring cell (for example, the second cell). If the quality of the reference signal of the first cell from the second network device is good, for example, is not lower than a specific threshold, the third network device does not need to configure, for the terminal device, a switching configuration or a switching command for switching to the neighboring cell (for example, the second cell), and the terminal device switches to accessing the first cell via the second network device (that is, performs soft switch from the first network device to the second network device).

Optionally, when reporting the measurement result based on the report configuration information, the terminal device may include the quality of the reference signal of the first cell from the second network device in a neighboring cell measurement result (for example, measResultNeighCells); or add indication information #F to the protocol, to indicate the quality of the reference signal of the first cell from the second network device.

Optionally, in step 305, the terminal device receives first condition information from the first network device.

The first condition information includes radio resource configuration information of a first candidate cell (for example, the second cell) and an execution condition for switching to the first candidate cell.

For measurement configuration information corresponding to the first condition information, refer to descriptions in steps 301 to 304.

Optionally, when first conditional switching is time-based conditional switching, a time range [T1, T2] in the time-based conditional switching may include a time range between the second time and the first time. For example, T1 is the same as the second time, and T2 is the same as the first time. The terminal device may measure, in the time period [T1, T2], the reference signal that is of the first cell and that is received from the second network device, and does not need to measure, outside the time period [T1, T2], the reference signal that is of the first cell and that is received from the second network device.

Optionally, [T1, T2] configured by the first network device or the third network device for different terminal devices may be different. For example, different terminal devices may access the first cell in different time periods via the second network device.

The terminal device evaluates whether the execution condition for switching to the first candidate cell is met. When the execution condition is met, the terminal device performs the conditional switching, that is, switches to the first candidate cell (uses the radio resource configuration information of the first candidate cell and accesses the first candidate cell).

Optionally, in step 306, the terminal device receives second condition information from the first network device.

The second condition information indicates the terminal device to perform the conditional switching to the first candidate cell based on the first condition information when the measured quality of the reference signal of the first cell from the second network device is lower than the first threshold.

Optionally, the second condition information may be included in the first condition information in step 305. For example, the second condition information may be that quality of a signal of the serving cell in an event reporting condition in the first condition information is lower than the first threshold. The measurement configuration information corresponding to the execution condition or the first condition information may carry indication information #B, indicating that an event-based reporting condition in the first conditional switching is that the quality of the signal that is of the first cell and that is received from the second network device is lower than the first threshold.

For example, the terminal device determines, based on an indication of the second condition information, whether the measured quality of the reference signal of the first cell from the second network device is lower than the first threshold. When the quality of the reference signal of the first cell from the second network device is lower than the first threshold, the terminal device performs the conditional switching to the first candidate cell based on the received first condition information. If the execution condition in the first condition information is met, the terminal device switches to the first candidate cell.

It should be noted that a sequence relationship between that the terminal device measures whether the quality of the reference signal of the first cell from the second network device is lower than the first threshold and that the terminal device evaluates whether the execution condition for switching to the first candidate cell is met is not limited in this application. In an implementation, the terminal device starts, only when the quality of the reference signal of the first cell from the second network device is lower than the first threshold, to evaluate whether the execution condition for switching to the first candidate cell is met. When the execution condition for switching to the first candidate cell is met, the terminal device performs the conditional switching, that is, switches to the first candidate cell (uses the radio resource configuration information of the first candidate cell and accesses the first candidate cell). In another implementation, the terminal device starts, only when the execution condition in the first condition information is met, to evaluate whether the quality of the reference signal of the first cell from the second network device is lower than the first threshold. When the quality of the reference signal of the first cell from the second network device is lower than the first threshold, the terminal device performs the conditional switching, that is, switches to the first candidate cell (uses the radio resource configuration information of the first candidate cell and accesses the first candidate cell). In another implementation, when receiving the first condition information, the terminal device starts to evaluate whether the execution condition for switching to the first candidate cell is met; and when receiving the second condition information, the terminal device evaluates whether the quality of the reference signal of the first cell from the second network device is lower than the first threshold. When both of the two conditions are met, the terminal device performs the conditional switching, that is, switches to the first candidate cell (uses the radio resource configuration information of the first candidate cell and accesses the first candidate cell).

Optionally, when step 305 and step 306 are performed, step 304 is optional.

In this embodiment of this application, according to the method in the embodiment in FIG. 3, the terminal device measures the quality of the reference signal of the first cell from the second network device based on the indication information, and sends the quality of the reference signal to the network device. Based on the quality of the reference signal, a probability of a radio link failure caused by the switching performed by the terminal device can be reduced. Further, according to the foregoing solution, after receiving the reference signal, the network device may determine a switching policy of the terminal device based on the quality of the reference signal. For example, if the network device determines that the quality of the reference signal is poor, the network device may indicate the terminal device not to continue to switch to accessing the first cell via the second network device, or may indicate the terminal device to switch to another cell with good signal quality, for example, the neighboring cell (second cell) of the first cell.

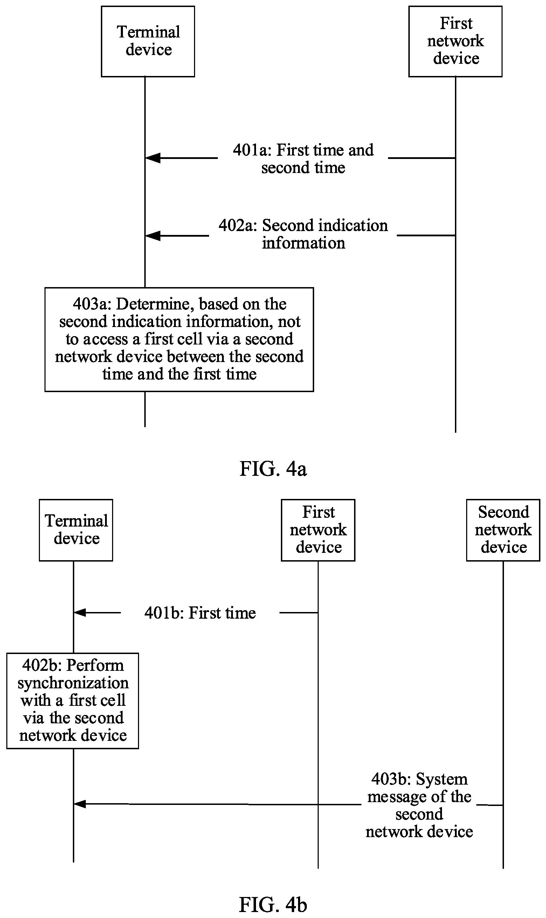

FIG. 4a is a schematic flowchart of another communication method according to an embodiment of this application. This embodiment is performed by a terminal device or a module (for example, a chip) in the terminal device, and a first network device or a module (for example, a chip) in the first network device. The following uses an example in which the terminal device, the first network device, and a second network device perform the method for description.

The method includes the following steps.

Step 401a: The terminal device receives a first time and a second time from the first network device.

The first time indicates a time at which the first network device stops serving a first cell, the second time indicates a time at which the second network device starts to serve the first cell, and the second time is less than or equal to the first time. For a relationship between the first cell, the first network device, and the second network device, refer to the descriptions in the embodiment in FIG. 3. Details are not described herein again.

Different from the embodiment in FIG. 3, the terminal device in this embodiment is a terminal device in an inactive state or an idle state in the first cell, and the first network device and the second network device provide coverage services for the first cell at the same time.

The terminal device camping on the first cell via the first network device may start, at a specific time between the second time and the first time, to measure a reference signal sent from the second network device. When quality of the reference signal sent from the second network device is higher than a second threshold, the terminal device may change to camping on the first cell via the second network device. Optionally, the first network device may send a value of the second threshold to the terminal device by using a broadcast message.

Step 402a: The terminal device receives second indication information.

Optionally, the second indication information indicates the terminal device not to access or camp on the first cell via the second network device between the second time and the first time.

Optionally, the second indication information indicates that the second network device is a target network device of the first cell. The terminal device does not access or camp on the first cell via the second network device between the second time and the first time.

The terminal device may receive the second indication information from the first network device. Optionally, when the terminal device camps on the first cell via the first network device, the terminal device does not change to camping on the first cell via the second network device between the second time and the first time, but chooses to access the first cell via the first network device. In this case, the terminal device may receive the first time and the second time from the first network device.

Optionally, the terminal device may alternatively receive the second indication information from the second network device. The second network device may send the second indication information to the terminal device in a broadcast manner. The second network device may further broadcast information about the first network device, for example, ephemeris information of the first network device, or a reference signal configuration (for example, an index of a reference signal) corresponding to the first network device. When the terminal device is just powered on in coverage of the first cell, the terminal device receives the signal from the second network device. In this case, the terminal device does not access the first cell via the second network device based on the second indication information between the second time and the first time, but chooses to access the first cell via the first network device.

In a possible implementation, a third network device serves a second cell, the second cell is a neighboring cell of the first cell, and the third network device sends third indication information to a terminal device in the second cell. The third indication information indicates that the first cell provides services via the first network device and the second network device at the same time between the second time and the first time, or indicate that the first network device and the second network device serve the first cell at the same time between the second time and the first time. The third indication information includes the second time and the first time. The terminal device camping on the second cell does not camp on the first cell via the second network device between the second time and the first time. Optionally, the third indication information further indicates the ephemeris information and/or the reference signal configuration (for example, the index of the reference signal) corresponding to the first cell in the first network device, or indicate ephemeris information and/or a reference signal configuration (for example, an index of a reference signal) corresponding to the first cell in the second network device, so that the terminal device camping on the second cell learns of, based on the reference signal configuration corresponding to the first cell in the first network device or the reference signal configuration corresponding to the first cell in the second network device, specific reference signals of the first cell that are sent from the first network device and specific reference signals of the first cell that are sent from the second network device. Therefore, the terminal device camping on the second cell can learn of whether a received reference signal of the first cell is sent from the first network device.

Step 403a: The terminal device determines, based on the second indication information, not to access or camp on the first cell via the second network device between the second time and the first time.

Optionally, the terminal device located in the first cell determines, based on the second indication information, to access the first cell via the first network device between the second time and the first time.

Optionally, for a terminal device in the idle state or the inactive state in the second cell (the terminal device in the second cell may alternatively be in a connected state), before the second time, only a reference signal sent by the first cell via the first network device is measured; after the first time, only a reference signal sent by the first cell via the second network device is measured; and between the second time and the first time, both the reference signal sent by the first cell via the first network device and the reference signal sent by the first cell via the second network device are measured, or between the second time and the first time, only the reference signal sent by the first cell via the first network device is measured. In this way, it can be ensured that when two network devices simultaneously serve the first cell, the terminal device in the second cell measures the reference information of the neighboring cell in different time periods via corresponding network devices, so that neighboring cell measurement can be performed more accurately.

In this embodiment of this application, according to the method in the embodiment in FIG. 4a, it can be ensured that all terminal devices that are located in the first cell between the second time and the first time access or camp on the first cell via the first network device, to avoid interference between the terminal devices in the same cell because a part of the terminal devices access or camp on the first cell via the first network device and a part of the terminal devices access or camp on the first cell via the second network device.

It may be understood that, to implement functions in the foregoing embodiments, the terminal device or the first network device includes corresponding hardware structures and/or software modules for performing the functions. A person skilled in the art should be easily aware that, in this application, units and method steps in the examples described with reference to embodiments disclosed in this application can be implemented by hardware or a combination of hardware and computer software. Whether a function is performed by hardware or hardware driven by computer software depends on particular application scenarios and design constraints of the technical solutions.

FIG. 4b is a schematic flowchart of another communication method according to an embodiment of this application. This embodiment is performed by a terminal device or a module (for example, a chip) in the terminal device, a first network device or a module (for example, a chip) in the first network device, and a second network device or a module (for example, a chip) in the second network device. The following uses an example in which the terminal device, the first network device, and the second network device perform the method for description.

The method includes the following steps.

Step 401b: The terminal device receives a first time from the first network device.

Optionally, the terminal device further receives a second time from the first network device.

For a relationship between the first time, the second time, a first cell, the first network device, and the second network device, refer to descriptions in the embodiment in FIG. 3. Details are not described herein again. The terminal device may be in a connected state, an inactive state, or an idle state. A status of the terminal device is not limited herein.

Optionally, the first time and the second time may be carried in system information (for example, system information 19) from the first network device. The terminal device receives the system information from the first network device, to obtain the first time and the second time. The system information may further carry assistance information corresponding to the second network device. The assistance information may include ephemeris information, an epoch time (epoch time) of the ephemeris information, a valid duration of the ephemeris information, and the like. Optionally, the system information may further carry indication information #D, to indicate that satellite switch with resynchronization is supported (in other words, when a satellite changes but a PCI of the cell remains unchanged, the first network device supports not sending a layer 3 handover command to a terminal device in the first cell). Optionally, the indication information #D may further include assistance information corresponding to the second network device.

An epoch time of ephemeris information corresponding to the second network device indicates a system frame number and a subframe number. In other words, the ephemeris information of the second network device refers to a location that is of the second network device and that corresponds to the epoch time, and the terminal device may calculate a location of the second network device at a current time based on the location that is of the second network device and that corresponds to the epoch time. The system frame number indicated in the epoch time indicates a current system frame or a next system frame when the terminal device receives the system information, or the system frame number indicated in the epoch time indicates a system frame closest to a system frame upon reception of the system information by the terminal device.

Optionally, the system information sent by the first network device further includes assistance information corresponding to a neighboring cell of the first cell of the second network device.

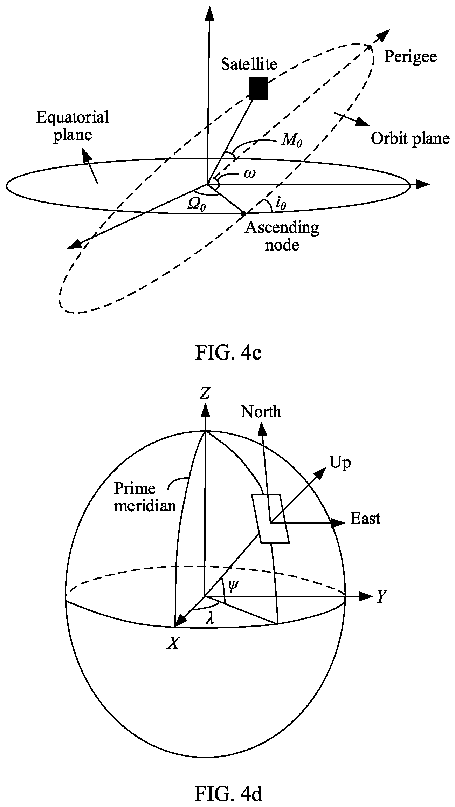

The ephemeris information may also be referred to as orbit information, and is running path information of a non-terrestrial network device associated with the cell, or may be referred to as ephemeris information of the non-terrestrial network device associated with the cell. For a manner of determining the ephemeris information, refer to FIG. 4c or FIG. 4d. FIG. 4c is a diagram of orbit information represented by using a Kepler orbit format according to an embodiment of this application, and FIG. 4d is a diagram of orbit information represented by using a state vector according to an embodiment of this application.

Parameters shown in FIG. 4c include orbit-level parameters. For example, *i₀* is an inclination angle, *Ω₀* is a longitude of an ascending node (ascending node) of an orbit plane, and *ω* is an angular distance of a perigee (perigee). The foregoing orbit-level parameters are used to determine an operating orbit. The parameters shown in FIG. 4d includes a satellite-level parameter, which is used to determine a satellite location, for example, *M₀* is used as a mean anomaly at an epoch time.

When the orbit information is represented by using the state vector, a speed vector in the state vector, for example, (*vₓ, v_{y}, v_{z}*), needs to provide rate and reference point information for an asynchronous satellite. A location coordinate system based on the state vector may be a longitude-latitude-height coordinate system (*λ*, *ψ, h)* or an earth-centered earth-fixed coordinate system (*X, X, Z*) shown in FIG. 4d, or the like. This is not limited in this embodiment of this application.

Step 402b: The terminal device performs synchronization with the first cell via the second network device.

For hard switch, the terminal device performs downlink synchronization with the first cell via the second network device from the first time. For soft switch, the terminal device performs downlink synchronization with the first cell via the second network device between the second time and the first time (for example, after any time between the second time and the first time).

The terminal device starts a timer #1 at a subframe time indicated by the epoch time that is of the ephemeris information of the second network device and that is received from the system information of the first network device. A length of the timer is the valid duration of the ephemeris information of the second network device that is received from the system information of the first network device.

Step 403b: The terminal device receives system information of the second network device.

The terminal device obtains the system information (for example, system information 19) from the second network device. Optionally, the terminal device obtains the system information of the second network device after performing the downlink synchronization with the first cell via the second network device. For example, after performing the downlink synchronization with the first cell via the second network device, the terminal device may obtain the system information of the second network device without waiting for the timer #1 to expire, or the terminal device obtains the system information of the second network device after performing the downlink synchronization with the first cell via the second network device and waiting for the timer #1 to expire. The system information sent by the second network device includes the assistance information corresponding to the second network device. When the terminal device obtains the system information sent by the second network device, the terminal device starts or restarts the timer #1 at the subframe time indicated by the epoch time that is of the ephemeris information of the second network device and that is received from the system information of the second network device. The length of the timer is the valid duration of the ephemeris information of the second network device that is received from the system information of the second network device.

The terminal device initiates a random access procedure in the first cell of the second network device; or the terminal device does not need to initiate a random access procedure in the first cell of the second network device, and directly performs data transmission (in other words, the terminal device receives and sends data based on a preconfigured grant previously sent by the first network device; or the terminal device monitors a downlink physical control channel sent by the second network device, to obtain a grant for receiving and sending data).

Optionally, before the terminal device obtains the system information of the second network device in step 403b, the terminal device may perform measurement on the neighboring cell of the first cell by using the assistance information that corresponds to the neighboring cell of the first cell of the second network device and that is obtained in step 401b.

It should be noted that a sequence relationship between the downlink synchronization, starting the timer, and obtaining the system information of the second network device is not limited in this application.

In this embodiment of this application, according to the method in the embodiment in FIG. 4b, it can be ensured that after the terminal device is synchronized to the first cell via the second network device, the terminal device can obtain, in time, the ephemeris information that is of the second network device and that is sent by the second network device, thereby ensuring switching performance of the terminal device. Further, the terminal device may obtain ephemeris information of the neighboring cell of the first cell of the second network device in time, so that the neighboring cell of the first cell can be measured in time, thereby ensuring the switching performance of the terminal device. In addition, the terminal device obtains the ephemeris information of the second network device in time, and may maintain the ephemeris information of the second network device by using a system frame number and a subframe number of the first cell of the second network device, thereby reducing complexity of the terminal device.

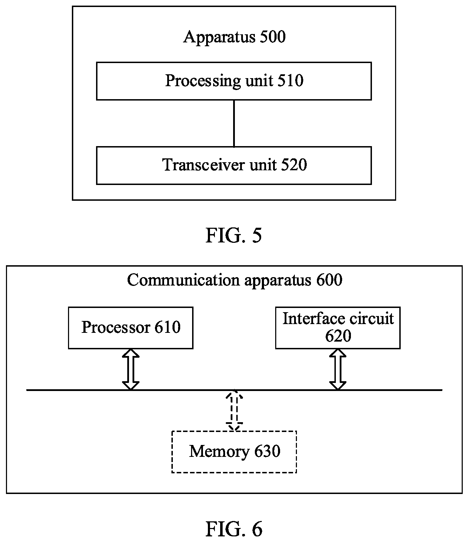

FIG. 5 and FIG. 6 are diagrams of structures of possible communication apparatuses according to embodiments of this application. The communication apparatuses may be configured to implement a function of the terminal device or the first network device in the foregoing method embodiments. Therefore, beneficial effects of the foregoing method embodiments can also be implemented. In embodiments of this application, the communication apparatus may be the terminal device, the first network device, or a module (for example, a chip) used in the terminal device or the first network device.

A communication apparatus 500 shown in FIG. 5 includes a processing unit 510 and a transceiver unit 520. The communication apparatus 500 is configured to implement the function of the terminal device or the first network device in the method embodiment shown in FIG. 3, FIG. 4a, or FIG. 4b.

When the communication apparatus is configured to implement the function of the terminal device in the foregoing method embodiments, the transceiver unit 520 is configured to receive indication information from a first network device, where the terminal device accesses a first cell via the first network device, and the indication information indicates the terminal device to measure a reference signal of the first cell from a second network device. The transceiver unit 520 is further configured to: receive the reference signal of the first cell from the second network device, and send signal quality of the reference signal of the first cell from the second network device to the first network device. The processing unit 510 is configured to measure the reference signal of the first cell from the second network device.

In a possible implementation, the transceiver unit 520 is further configured to receive a first time and a second time from the first network device, where the first time indicates a time at which the first network device stops serving the first cell, the second time indicates a time at which the second network device starts to serve the first cell, and the second time is earlier than or equal to the first time. The processing unit 510 is further configured to switch, at a third time, from accessing the first cell via the first network device to accessing the first cell via the second network device, where the third time is between the second time and the first time.

In a possible implementation, the transceiver unit 520 is further configured to receive measurement configuration information from the first network device, where the measurement configuration information includes the indication information, the measurement configuration information is used to configure the terminal device to measure the reference signal, the measurement configuration information includes a measurement object and report configuration information, and the measurement object is a measurement object corresponding to the first cell.

In a possible implementation, the transceiver unit 520 is further configured to receive first SMTC information and second SMTC information from the first network device, where the first SMTC information is used to measure the reference signal of the first cell from the second network device and a reference signal of a neighboring cell of the first cell, and the second SMTC information is used to measure the reference signal of the neighboring cell of the first cell.

In a possible implementation, the transceiver unit 520 is further configured to receive first condition information from the first network device, where the first condition information includes radio resource configuration information of a first candidate cell and an execution condition for switching to the first candidate cell. The transceiver unit 520 is further configured to receive second condition information from the first network device, where the second condition information indicates to perform conditional switching to the first candidate cell when the measured signal quality of the reference signal of the first cell from the second network device is lower than a first threshold.

In a possible implementation, the processing unit 510 is further configured to: measure the reference signal of the neighboring cell of the first cell based on the second SMTC information before the second time or after the first time; and measure the reference signal of the first cell from the second network device and the reference signal of the neighboring cell of the first cell based on the first SMTC information between the second time and the first time.

In a possible implementation, the processing unit 510 is further configured to measure quality of the signal of the first cell from the second network device between the second time and the first time, and measure quality of a signal of the first cell from the first network device between the second time and the first time.

In a possible implementation, the processing unit 510 is further configured to separately maintain, between the second time and the first time, the measured quality of the signal of the first cell from the second network device and the measured quality of the signal of the first cell from the first network device.

When the communication apparatus 500 is configured to implement the function of the first network device in the foregoing method embodiments, the transceiver unit 520 is configured to send indication information to a terminal device, where the indication information indicates the terminal device to measure a reference signal of a first cell from a second network device, and the first cell is a cell accessed by the terminal device via the first network device. The transceiver unit 520 is further configured to receive signal quality of the reference signal from the terminal device.

In a possible implementation, the transceiver unit 520 is further configured to send a first time and a second time to the terminal device, where the first time indicates a time at which the first network device stops serving the first cell, the second time indicates a time at which the second network device starts to serve the first cell, the second time is less than or equal to the first time, a third time is between the second time and the first time, and the third time is a time at which the terminal device switches from accessing the first cell via the first network device to accessing the first cell via the second network device.

In a possible implementation, the transceiver unit 520 is further configured to send measurement configuration information to the terminal device, where the measurement configuration information includes the indication information, the measurement configuration information is used to configure the terminal device to measure the reference signal, the measurement configuration information includes a measurement object and report configuration information, and the measurement object is a measurement object corresponding to the first cell.

In a possible implementation, the transceiver unit 520 is further configured to send first SMTC information and second SMTC information to the terminal device, where the first SMTC information is used to measure the reference signal of the first cell from the second network device and a reference signal of a neighboring cell, and the second SMTC configuration information is used to measure the reference signal of the neighboring cell.

In a possible implementation, the transceiver unit 520 is further configured to send first condition information to the terminal device, where the first condition information includes radio resource configuration information of a first candidate cell and an execution condition for switching to the first candidate cell. The transceiver unit 520 is further configured to send second condition information to the terminal device, where the second condition information indicates to perform conditional switching to the first candidate cell when the measured signal quality of the reference signal of the first cell from the second network device is lower than a first threshold.

For more detailed descriptions of the processing unit 510 and the transceiver unit 520, directly refer to related descriptions in the foregoing method embodiments. Details are not described herein again.

A communication apparatus 600 shown in FIG. 6 includes a processor 610 and an interface circuit 620. The processor 610 and the interface circuit 620 are coupled to each other. It may be understood that the interface circuit 620 may be a transceiver or an input/output interface. Optionally, the communication apparatus 600 may further include a memory 630, configured to: store instructions executed by the processor 610, input data needed by the processor 610 to run the instructions, or data generated after the processor 610 runs the instructions.

When the communication apparatus 600 is configured to implement the foregoing method embodiments, the processor 610 is configured to implement a function of the processing unit 510, and the interface circuit 620 is configured to implement a function of the transceiver unit 520.

It may be understood that the processor in this embodiment of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, any conventional processor, or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, and a compact disk read-only memory (compact disc read-only memory, CD-ROM) or any other form of storage medium well known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a terminal device or a network device. Certainly, the processor and the storage medium may alternatively exist in an access network device or a terminal as discrete components.

All or a part of the foregoing embodiments may be implemented by using software, hardware, firmware, or any combination thereof. When the software is used for the implementation, all or a part of the embodiments may be implemented in a form of a computer program product. The computer program product includes one or more computer programs or instructions. The computer program (English: Computer Program) is a set of instructions that instruct each step of an electronic computer or another device having a message processing capability, is usually written in a program design language, and is run in a target system structure. When the computer program or the instructions are loaded and executed on a computer, all or some procedures or functions according to embodiments of this application are executed. The computer may be a general-purpose computer, a dedicated computer, a computer network, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

In this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, performed by a terminal device or a chip used in the terminal device, and comprising:
receiving a first time from a first network device;
performing downlink synchronization with a first cell via a second network device at the first time; and
obtaining system information of the second network device after performing the downlink synchronization with the first cell via the second network device.

2. The method according to claim 1, wherein the method further comprises:
accessing the first cell via the first network device before the first time, and accessing the first cell via the second network device after the first time.

3. The method according to claim 1 or 2, wherein the method further comprises:
receiving a second time from the first network device, wherein the second time is a time at which the second network device serves the first cell.

4. The method according to claim 3, wherein the method further comprises:
performing the downlink synchronization with the first cell via the second network device between the second time and the first time.

5. The method according to any one of claims 1 to 4, wherein the system information comprises indication information, and the indication information indicates that satellite switch with resynchronization is supported.

6. The method according to any one of claims 1 to 5, wherein the system information comprises system information 19.

7. The method according to any one of claims 1 to 6, wherein the system information comprises a subframe time indicated by an epoch time of ephemeris information of the second network device and a valid duration of the ephemeris information of the second network device, a timer is started or restarted at the subframe time, and a length of the timer is the valid duration of the ephemeris information of the second network device that is comprised in the system information.

8. A communication method, performed by a first network device or a chip used in the first network device, and comprising:
sending a first time to a terminal device, wherein the first time is used by the terminal to perform downlink synchronization with a first cell via a second network device, and to obtain a system message of the second network after the downlink synchronization; and
serving the terminal device in the first cell before the first time.

9. The method according to claim 8, wherein the method further comprises:
sending a second time to the terminal device, wherein the second time is a time at which the second network device serves the first cell.

10. The method according to claim 8 or 9, wherein the system information comprises indication information, and the indication information indicates that satellite switch with resynchronization is supported.

11. The method according to any one of claims 8 to 10, wherein the system information comprises system information 19.

12. The method according to any one of claims 8 to 11, wherein the system information comprises a subframe time indicated by an epoch time of ephemeris information of the second network device and a valid duration of the ephemeris information of the second network device, the subframe time is used to start or restart a timer, and a length of the timer is the valid duration of the ephemeris information of the second network device that is comprised in the system information.

13. A communication apparatus, comprising a module configured to perform the method according to any one of claims 1 to 7, or the method according to any one of claims 8 to 12.

14. A communication apparatus, comprising a processor, wherein when the communication apparatus runs, the processor executes computer instructions to perform the method according to any one of claims 1 to 7, or the method according to any one of claims 8 to 12.

15. A communication apparatus, comprising a processor and an interface circuit, wherein the processor is configured to: communicate with another apparatus through the interface circuit, and perform the method according to any one of claims 1 to 7, or the method according to any one of claims 8 to 12.

16. A computer program product, wherein the computer program product comprises instructions; and when the instructions are run on a processor, the processor is caused to perform the method according to any one of claims 1 to 7, or the method according to any one of claims 8 to 12.

17. A computer-readable storage medium, wherein the storage medium stores a computer program or instructions; and when the computer program or the instructions are executed by a communication apparatus, the method according to any one of claims 1 to 7, or the method according to any one of claims 8 to 12 is implemented.

18. A communication system, comprising a terminal device configured to perform the method according to any one of claims 1 to 7, and a network device configured to perform the method according to any one of claims 8 to 12.
